Europäisches Patentamt

**European Patent Office**

**Office européen des brevets**

(11) Numéro de publication: **0 149 941**
**A2**

(12) # DEMANDE DE BREVET EUROPEEN

(21) Numéro de dépôt: **84402643.5**

(22) Date de dépôt: **18.12.84**

(51) Int. Cl.⁴: **H 01 M 6/36**

(30) Priorité: **19.12.83 FR 8320283**

(43) Date de publication de la demande:
**31.07.85 Bulletin 85/31**

(84) Etats contractants désignés:
**DE GB IT**

(71) Demandeur: **SOCIETE NATIONALE INDUSTRIELLE AEROSPATIALE Société dite:**
**37 Boulevard de Montmorency**
**F-75781 Paris Cedex 16(FR)**

(72) Inventeur: **Riffault, Françoise**
**10 Résidence du Clos**
**F-91370 Verrieres-Le-Buisson(FR)**

(72) Inventeur: **Pathe, Claude**
**97 rue Gay Lussac**
**F-92320 Chatillon(FR)**

(72) Inventeur: **Ferrier, Serge**
**6bis rue Jean Jaurès**
**F-91430 Igny(FR)**

(74) Mandataire: **Santarelli, Marc**
**Cabinet Rinuy et Santarelli 14, avenue de la Grande Armée**
**F-75017 Paris(FR)**

(54) **Perfectionnement apporté aux générateurs électrochimiques à activation thermique, dont l'anode est au lithium et la cathode un oxyde supérieur ou sulfure métallique.**

(57) L'invention concerne un générateur électrochimique à activation thermique perfectionée dont l'anode est au lithium, la cathode comprend un oxyde supérieur ou sulfure métallique et l'électrolyte est un mélange d'halogénures alcalins, générateur caractérisé par le fait que le matériau anodique est un alliage binaire très riche en lithium.

EP 0 149 941 A2

1

### Perfectionnement apporté aux générateurs électrochimiques à activation thermique, dont l'anode est au lithium et la cathode un oxyde supérieur ou sulfure métallique

La présente invention concerne des générateurs électrochimiques perfectionnés fonctionnant à une température élevée (de l'ordre de 600°C) dont l'anode est à base de lithium et la cathode comprend un oxyde supérieur ou un sulfure métallique.

Dans la présente description, on désigne par pile thermique, un générateur électrochimique comprenant une électrode positive et une électrode négative entre lesquelles est disposée une couche d'un électrolyte solide généralement constitué d'un sel fusible non conducteur à température ambiante, mais devenant conducteur ionique lors de sa fusion par chauffage produisant alors de l'électricité par des réactions électrochimiques entre l'anode et la cathode.

On entend aussi plus généralement par "batterie thermique" tout ensemble comprenant plusieurs générateurs électrochimiques du type ci-dessus rappelé, reliés en parallèle ou en série, des moyens capables de produire la chaleur nécessaire à l'échauffement desdits générateurs et les éventuels moyens d'isolation thermique assurant le maintien en température convenable pendant au moins la durée en fonctionnement. Ces batteries thermiques sont utilisées comme source d'énergie dans de nombreuses applications, notamment celles nécessitant de longues durées de stockage.

La présente invention se propose de fournir une pile thermique dont l'anode est au lithium, la cathode un oxyde supérieur ou un sulfure métallique et l'électrolyte un mélange eutectique d'halogénures alcalins, présentant un meilleur rendement massique que les piles de ce type actuellement connu.

On sait en effet que si du lithium est utilisé comme anode dans une pile thermique du type rappelé ci-dessus, on devrait s'attendre à l'obtention d'un niveau d'énergie élevé. Toutefois, il ne peut être utilisé seul en raison de son bas point de fusion. Or, ce dernier peut être élevé en réalisant des alliages avec des métaux ou métalloides à point de fusion plus élevé.

L'invention concerne donc l'amélioration du rendement de ce type de pile.

Bien entendu, dans la pile conforme à l'invention, le matériau anodique aura une structure stable à la température de fonctionnement de la cellule électrochimique thermiquement activée . Il sera chimiquement compatible avec l'électrolyte minéral fusible (mélange d'halogénures alcalins) ainsi qu'avec les composés utilisés à la cathode (sulfures ou oxydes supérieurs métalliques).

De façon particulière et c'est une des caractéristiques de l'invention, ce matériau sera très riche en lithium.

Suivant une autre caractéristique, le matériau anodique est un alliage binaire lithium-bore dont la composition comprend entre 60 et 85 % en masse de lithium.

La structure d'un tel alliage peut être décrite comme une phase de lithium enserrant un composé lithium-bore tel que défini ci-dessus.

Ainsi, la pile selon l'invention se caractérise par le fait qu'elle comprend :

- à l'anode, un alliage binaire lithium-bore très riche en lithium ;

- en tant qu'électrolyte, un mélange d'halogénures alcalins ;

- à la cathode un composé choisi parmi les sulfures et oxydes supérieurs métalliques ;

- en tant que composition pyrotechnique pouvant servir aussi de collecteur de courant, un mélange oxydo-réducteur conducteur.

Suivant d'autres caractéristiques :

- l'électrolyte consiste en un mélange eutectique de chlorure de lithium et de chlorure de potassium ;

- le composé cathodique est choisi parmi les composés suivants : chromate de calcium, chromate de lithium, oxyde de vanadium, oxyde d'uranium, sulfure de fer et analogues.

0149941

Les exemples suivants sont donnés à titre illustratif et nullement limitatif :

Exemple 1

On a constitué une pile thermique selon l'invention, comprenant comme matériau anodique un alliage lithium-bore correspondant à une proportion de 70% en poids de lithium pour 30 % en poids de bore. Cette masse d'alliage (environ 2 g) a été couchée sur une grille collectrice de courant en acier inoxydable . L'électrolyte était un mélange eutectique de chlorure de lithium et de chlorure de potassium maintenu dans l'espace inter-électrode par adjonction d'un gel (par exemple de silice du type de celui vendu sur le marché sous le nom de "AEROSIL") dans une proportion de 85-15 % en masse respectivement d'eutectique et de gel. La cathode comprenait un mélange de sulfure de fer (65 %) et d'eutectique LiCl-KCl (35 %).

Exemple 2

Comme dans l'exemple 1, on a réalisé une pile thermique selon l'invention dont l'anode était en un alliage lithium-bore (80 %-20 %) en masse couchée sur une grille collectrice de courant en acier inoxydable. L'électrolyte était le même que celui de l'exemple 1 ; la cathode comprenait un mélange de chromate de calcium, d'eutectique LiCl-KCl et de gélifiant.

Le rendement massique de ces deux piles s'est avéré être d'au moins 20 % supérieur à celui que l'on obtient habituellement avec ce type de pile thermique à anode comprenant un alliage de lithium et d'un autre métal mais moins riche en lithium, (par exemple alliage Li-Al à plus faible teneur en Li).

Il va de soi que la présente invention n'a été décrite qu'à titre purement explicatif et nullement limitatif et que toute modification utile pourra y être apportée sans sortir de son cadre.

REVENDICATIONS

1. Générateur électrochimique à activation thermique perfectionnée dont l'anode est au lithium, la cathode comprend un oxyde supérieur ou sulfure métallique et l'électrolyte est un mélange d'halogénures alcalins, générateur caractérisé par le fait que le matériau anodique est un alliage binaire très riche en lithium.

2. Générateur électrochimique selon la revendication 1, caractérisé par le fait que le matériau anodique est un alliage binaire lithium-bore dont la composition comprend entre 60 et 85 % en masse de lithium.

3. Générateur électrochimique selon la revendication 1 ou 2, caractérisé par le fait que l'électrolyte consiste en un mélange eutectique de chlorure de lithium et de chlorure de potassium.

4. Générateur électrochimique selon l'une quelconque des revendications 1 à 3, caractérisé par le fait que le matériau anodique est choisi parmi les composés suivants : chromate de calcium, chromate de lithium, oxyde de vanadium, oxyde d'uranium, sulfure de fer et analogues.